# EUROPEAN PATENT SPECIFICATION

(11) **EP 0 391 422 B1**
(45) Date of publication and mention of the grant of the patent: **05.07.1995**
(21) Application number: 90106552.4
(22) Date of filing: 05.04.1990
(51) Int. Cl.: G11B 7/09, G11B 7/095

(54) **Optical disk unit**
Optische Platteneinheit
Unité de disque optique

(30) Priority: 06.04.1989 JP 85849/89; 28.04.1989 JP 111619/89; 28.08.1989 JP 218515/89
(43) Date of publication of application: 10.10.1990
(73) Proprietor: KABUSHIKI KAISHA TOSHIBA, Kawasaki-shi, Kanagawa-ken 210 (JP)
(72) Inventor: Takahara, Tamane, Tokyo (JP); Osawa, Hideki, Yokohama-shi, Kanagawa-ken (JP); Seo, Naobumi, Yokohama-shi, Kanagawa-ken (JP)
(74) Representative: Lehn, Werner, Dipl.-Ing.

(56) References cited:
- EP-A- 0 183 554
- EP-A- 0 277 799
- DE-A- 3 825 938

## Description

### Field of the Invention

The present invention relates to an optical disk unit that records and reads information to and from an optical disk, and particularly to an optical disk unit that can accurately measure the relative speed of a light spot radially moving on the optical disk to access a target track on the optical disk.

### Description of the Prior Art

An optical disk unit employs a light spot to access one of a plurality of tracks formed on an optical disk. This track accessing operation is generally carried out by a combination of speed control and position control.

In the speed control, a relative speed of the light spot radially moving on the optical disk by crossing the tracks is measured, and compared with a reference speed to provide a speed error signal. Based on the speed error signal, the speed of the light spot is controlled.

When the light spot reaches a target track, the position control is started to make the light spot follow the target track. In the position control, a positional error signal is provided based on an error between the position of the light spot and the target track. According to the positional error signal, the position of the light spot is controlled.

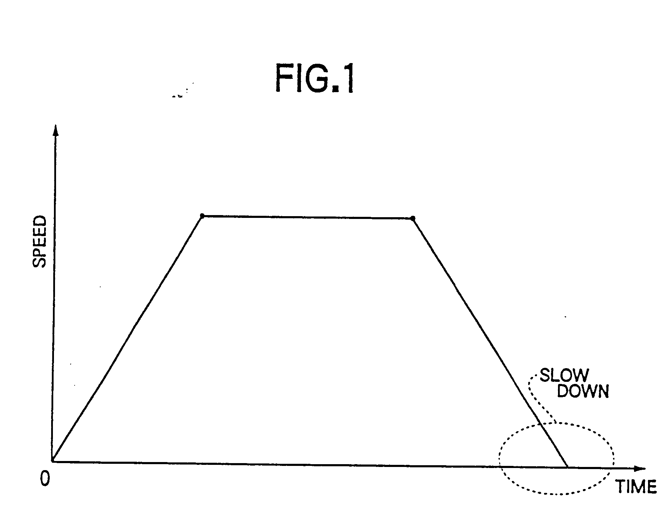

Figure 1 shows a movement of the light spot on the optical disk. To access a target track where required data is recorded, the light spot is moved from a present track to the target track according to the speed control at first. When the light spot reaches the target track, the light spot is slowed down, and the speed control is switched to the position control.

To measure a relative speed of the light spot on the optical disk for the speed control, a conventional technique detects a signal from the optical disk, and generates a pulse whenever the light spot crosses one or a half track. An interval of pulses thus obtained corresponds to the relative speed of the light spot. The conventional technique measures a time period of the interval, and executes arithmetic operations including a multiplicative inverting operation to find the relative speed of the light spot.

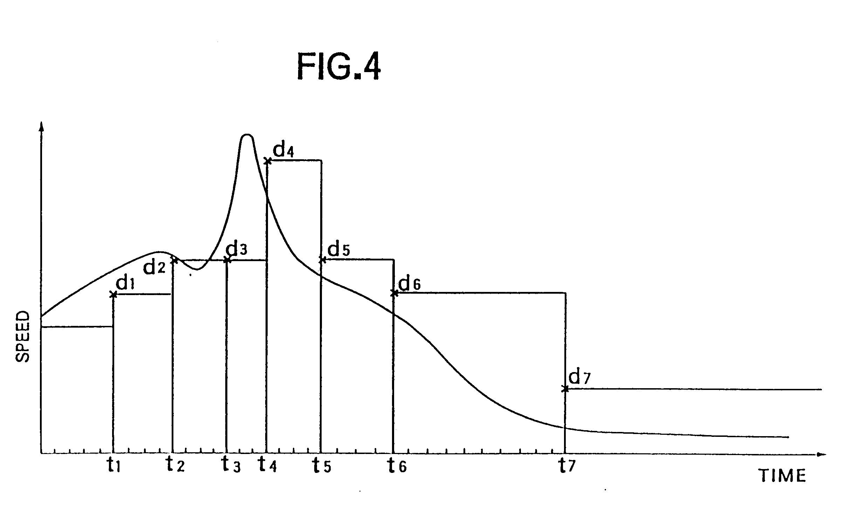

Figure 4 shows a principle of the conventional speed measuring technique. In the figure, a thin line indicates temporal changes of an actual relative speed of the light spot, and a thick line a measured relative speed of the same.

Pulses whose intervals change in response to the relative speed of the light spot are generated at t1, t2, and so on, as the light spot is moved on the optical disk. When a pulse is generated at t1, a time measurement starts. When the next pulse is generated at t2, an elapsed time (t2-t1) for the period from t1 to t2 is provided and held. An inverse number of the elapsed time for the period of (t2-t1) is calculated and multiplied by a suitable coefficient to provide a speed d2, which is an averaged speed of the light spot moved relative to the optical disk for the period of (t2-t1). The speed d2 is held for a period from t2 to t3. This operation is repeated for each pulse generation to determine the relative speed of the light spot on the optical disk.

The technique mentioned above is relatively easy to provide the relative speed of a light spot. The technique has, however, several drawbacks. As shown in Fig. 4, the measured speed indicated with the thick line satisfactorily follows the actual speed only before t4. After t4, the measured speed greatly deviates from the actual speed. The reason of this is because the measured speed is not updated frequently in a deceleration state where an interval of pulses gradually gets longer. In an extreme case of beyond t7, a speed d7 measured at t7 is maintained forever, if no pulse is generated after t7, even when the actual speed becomes 0 after t7. If such an incorrect measurement is used for controlling the light spot, a phase delay may occur to destabilize a motion of the light spot.

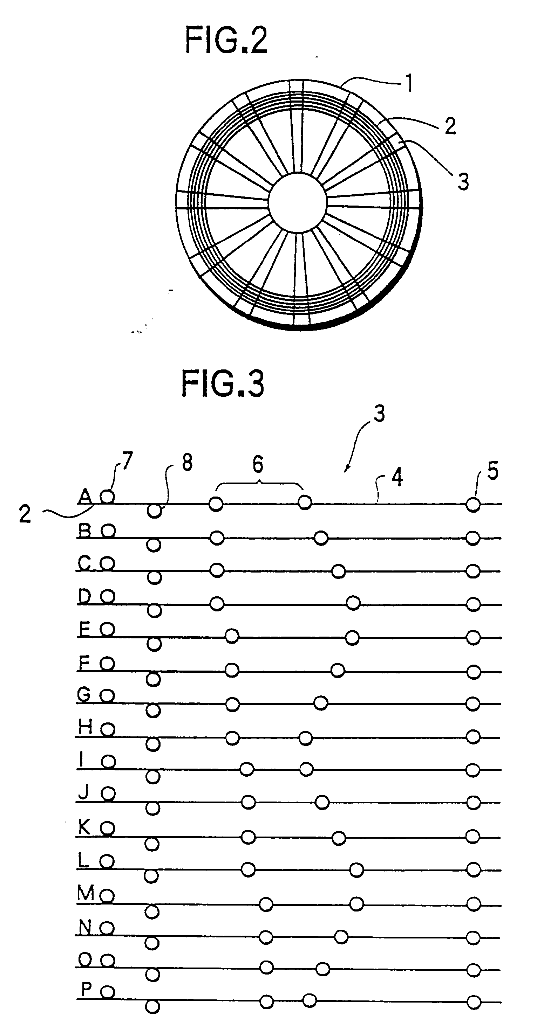

One of techniques for providing information such as the relative speed of a light spot for various control purposes is a sample servo technique, which will be explained with reference to Figs. 2 and 3.

An optical disk 1 shown in Fig. 2 has spiral or concentrical tracks 2. Servo area 3 are intermittently formed on the tracks 2 to provide detection signals from which information for various control purposes is obtainable. Figure 3 shows an example of the servo area 3. The servo area 3 of each track 2 involves wobbled pits 7 and 8 disposed on the left and right sides of the track, an access mark portion 6, a mirror portion 4, and a clock pit 5. The wobbled pits 7 and 8 provide tracking signals, and the mirror portion 4 provides a focus error signal. The clock pit 5 provides a system clock to be used for recording and reading operations.

The access mark portion 6 provides a pit pattern that is specific for predetermined tracks and is utilized to detect the number of tracks crossed by a light spot radially moving on the optical disk 1, in a target track accessing operation. Figure 3 shows 16 pit patterns that repeat every 16 tracks.

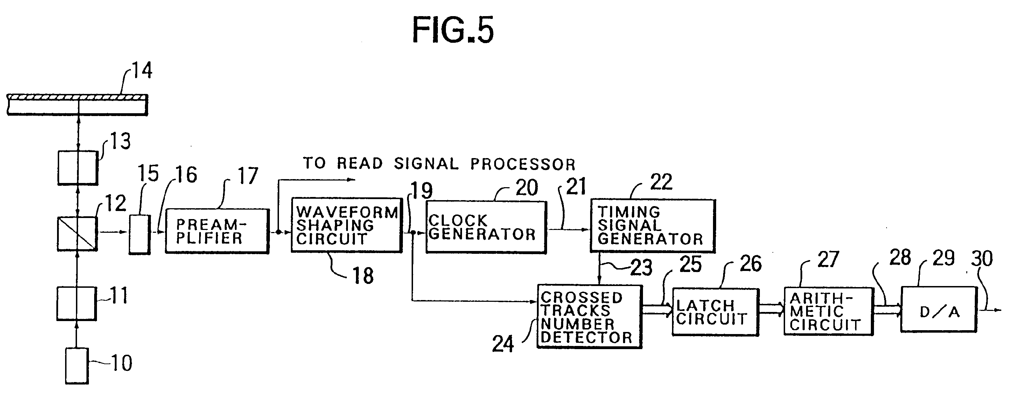

Figure 5 shows a conventional optical disk unit for achieving the sample servo technique explained above. In the figure, a laser beam source 10 emits a laser beam, which passes through a collimator lens 11, beam splitter 12, and objective lens 13, and the beam spot is incidence upon an optical disk 14. A reflection of the light spot from the optical disk 14 is passed through the objective lens 13, reflected by the beam splitter 12, and led to a photodetector 15.

The photodetector 15 provides an output signal 16, which is amplified by a preamplifier 17, and led to a read signal processing circuit (not shown) and a waveform shaping circuit 18, which provides a binary signal 19. The signal 19 is transferred to a clock generator 20, which regenerates a system clock 21 based on a clock pit of a servo area of the optical disk 14.

A timing signal generator 22 uses the system clock 21 to provide a timing signal 23 to be used for detecting an access mark from the binary signal 19. A crossed tracks number detector 24 uses the timing signal 23 to detect the access mark from the binary signal 19, and provides a crossed tracks number 25 when a change is detected in the access mark. The crossed tracks number indicates the number of tracks crossed by the light spot. The crossed tracks number 25 is supplied to a storage circuit 27 through a latch circuit 26, and multiplied by a coefficient to provide a speed data signal 28. The signal 28 is converted by a digital-to-analog converter 29 into a speed signal 30.

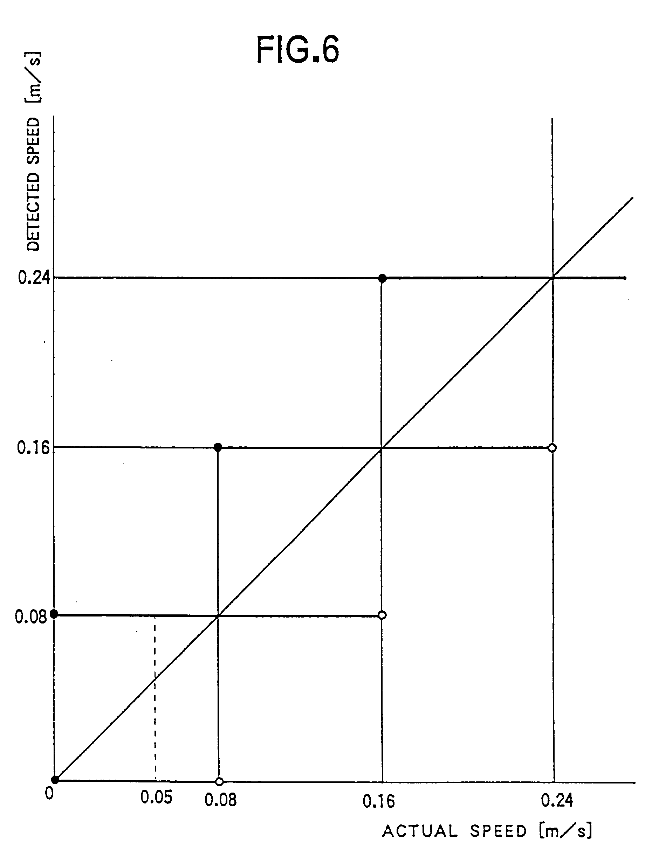

Figure 6 shows relative speed characteristics measured by the conventional optical disk unit explained above. In the figure, an abscissa represents actual speeds, and an ordinate measured speeds. Values shown in the figure are based on a period of appearance of the servo areas, i.e., a sample period, of 20 »s and a track pitch of 1.6 »m. An actual speed in the range of 0 to 0.08 m/s will be measured as 0 or 0.08 m/s, and an actual speed in the range of 0.08 to 0.16 m/s will be measured as 0.08 or 0.16 m/s. The reason of this is because a resolution of the access marks is one track to cause a maximum error of 0.08 m/s.

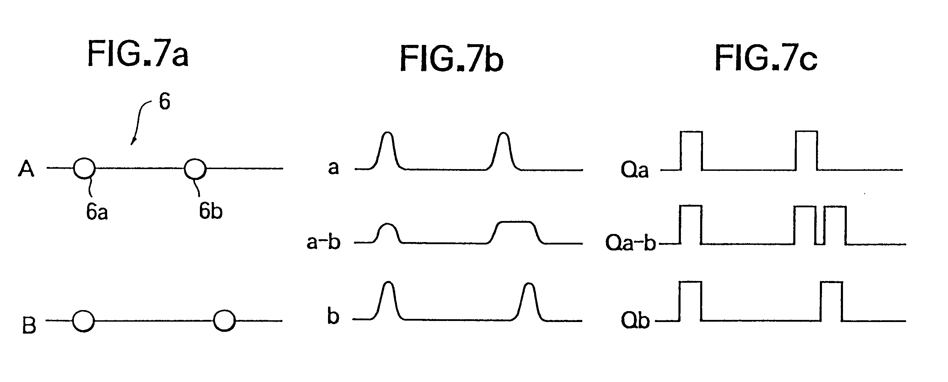

A reading operation of the access marks in the servo areas by the conventional optical disk unit will be explained with reference to Figs. 7a, 7b, and 7c.

Figure 7a shows access marks of tracks A and B, Fig. 7b output signals based on the access marks of Fig. 7a, and Fig. 7c binary signals shaped from the output signals of Fig. 7b. The optical disk unit is storing sixteen kinds of reference binary patterns with which a detected pattern is checked to see whether it matches one of the reference binary patterns.

Supposing the binary pattern Qa of Fig. 7c is received, it is recognized that a light spot is on the track having the access mark A because the received signal matches one of the stored patterns. By comparing access marks read at two consecutive sample times with each other, the number of tracks crossed by the light spot during the sample period will be detected. For example, it is detected that the crossed trucks number is one from the access marks A and B. In this way, if a pattern that matches one of the 16 reference access mark patterns is detected, the number of tracks crossed by the light spot can be detected.

The light spot on the optical disk has a certain size, and therefore, signals such as a and b shown in Fig. 7b are sometimes detected between the tracks A and B, although the detected level thereof is low.

If such signals are obtained between the tracks, the signals may provide a combined pattern a-b or Qa-b shown in Figs. 7b and 7c. Since the combined pattern does not match with any one of the stored patterns, it is judged that a read error has occurred, and no operation is carried out to find the crossed tracks number. Namely, a correct crossed track number will not be obtainable until a matching pattern is detected. This may reduce a chance of obtaining information for controlling the movement of the light spot, and lead to an insufficient control of the accessing operation.

The conventional optical disk unit has another problem of providing pattern signals alternately. When output signals from an optical disk are unstable or when tracks of the optical disk are eccentric relative to the center of the optical disk, binary pattern signals such as Qa and Qb of Fig. 7c may alternately be detected even when the light spot is stationary between the tracks A and B. This may happen during an accessing operation in which the light spot crosses a track in several sample periods, and particularly in a latter half of the accessing operation. If this happens, it is judged that the light spot is moving irregularly back and forth on the optical disk, and then, the light spot which is actually moving smoothly in one direction will wrongly be controlled.

As explained above, the light spot on the optical disk has a certain size, and therefore, detects signals between adjacent tracks of the optical disk. This may cause the following problems:
(1) A combined pattern such as Qa-b of Fig. 7c, if detected, is judged as a read error, and the optical disk unit carries out no operation of finding a crossed tracks number. This reduces a chance of correct control of the light spot, and destabilizes the movement of the light spot on the optical disk.
(2) Alternate detection of binary patterns from adjacent tracks also destabilizes the movement of the light spot on the optical disk, because the optical disk unit will judge from the alternate detection that the light spot is moving alternately in forward and backward directions, and unnecessarily control the movement of the light spot according to the judgment, even when the light spot is moving smoothly in one direction on the optical disk.

### SUMMARY OF THE INVENTION

An object of the present invention is to provide an optical disk unit that can achieve a stable speed control of a light spot in accessing a track on an optical disk.

Another object of the present invention is to provide an optical disk unit that can accurately detect the speed of a light spot relative to an optical disk.

Still another object of the invention is to provide an optical disk unit that can correctly measure the speed of a light spot relative to an optical disk even in a decelerating state of the light spot.

Still another object of the invention is to provide an optical disk unit that can provide improved controllability for a high-speed accessing operation with minute reading error of servo information.

According to the present invention, an optical disk unit comprises a pulse train generator for generating a train of pulses whose intervals change in response to changes in a speed of a light spot that is moved relative to an optical disk in a radial direction of the optical disk; a counter for counting an elapsed time of a pulse generated by the pulse train generator; a memory for storing an output of the counter until the pulse train generator generates the next pulse; and an arithmetic circuit for comparing an output of the counter with an output of the memory, and selecting larger one of the outputs. A speed of the light spot relative to the optical disk is measured according to the selected output.

These and other objects, features and advantages of the present invention will be more apparent from the following detailed description of preferred embodiments in conjunction with the accompanying drawings.

### BRIEF DESCRIPTION OF THE DRAWINGS

Fig. 1 is a view for explaining speed control of a light spot in a data accessing operation;
Fig. 2 is a schematic view showing a sample servo format optical disk;
Fig. 3 is a view showing servo patterns formed on the optical disk of Fig. 2;
Fig. 4 is a view showing light spot moving speeds measured by a conventional technique;
Fig. 5 is a block diagram showing an optical disk unit according to a prior art;
Fig. 6 is a view showing characteristics of light spot moving speeds measured by the prior art of Fig. 5;
Figs. 7a to 7c are views showing pit arrangements of an access mark portion of an optical disk, and binary signals derived from the pit arrangements;
Fig. 8 is a block diagram showing an optical disk unit according to the present invention;
Figs. 9a to 9e are views showing light spot moving speeds measured by the above embodiment; and
Fig. 10 is a view showing light spot moving speeds measured by a modification of the above embodiment.

### DETAILED DESCRIPTION OF THE EMBODIMENTS

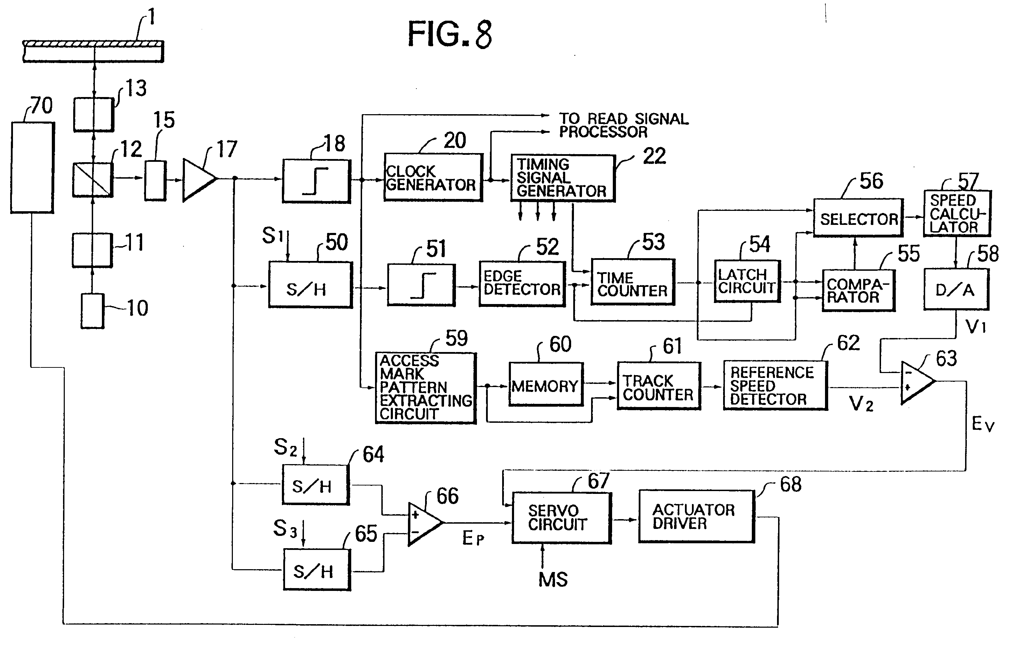

An optical disk unit according to an embodiment of the invention will be explained with reference to Figs. 8 to 10.

The optical head 9 includes a laser beam source 10, a collimator lens 11, beam splitter 12, an object lens 13, and a photodetector 15. The laser beam source 10 such as a semiconductor laser emits a laser beam. The laser beam is passed through the collimator lens 11 and beam splitter 12, and converged by the object lens 13 into a very small light spot, which is incident upon the optical disk 1.

A reflected light beam from the optical disk 1 is passed through the object lens 13, reflected by the beam splitter 12, and led to the photodetector 15, which provides a detected signal. The detected signal is amplified by a preamplifier 17 and supplied to a read signal processor (not shown) and a waveform shaping circuit 18, which provides a binary signal to a clock generator 20.

Based on the binary signal, the clock generator 20 generates a system clock that corresponds to a clock pit 5 (Fig. 3) included in a servo area formed on the optical disk 1. The system clock is supplied as a system clock to the read signal processor (not shown) and a timing signal generator 22, which generates various timing signals according to the system clock, required by various components.

The amplified signal from the preamplifier 17 is also supplied to a sample and hold circuit 50. In response to a sample timing signal S1 from the timing signal generator 22, the sample and hold circuit 50 samples and holds a peak value of a signal corresponding to the clock pit in the amplified signal. An output of the sample and hold circuit 50 is supplied to a waveform shaping circuit 51, which provides a binary signal one period of which corresponds to one track.

An edge detector 52 may be a monostable multivibrator, and generates a thin pulse at every edge of a rise or fall of the binary signal provided by the waveform shaping circuit 50, thereby providing a train of pulses whose intervals change in response to a relative speed of the light spot radially moving on the optical disk 1.

The pulse train from the edge detector 52 is applied to a reset input R of a time counter 53. A clock input CK of the time counter 53 receives a timing signal from the timing signal generator 22. An interval of the timing signals corresponds to a sample period. When the reset input R of the time counter 53 receives a pulse, the time counter 53 is reset. Thereafter, the time counter 53 counts up the number of pulses applied to the clock input CK thereof. Namely, whenever the edge detector 52 provides a pulse, the time counter 53 starts to count a sample number, and provides a digital output indicative of the sample number. By multiplying the sample number by the sample period, an elapsed time will be obtained. Therefore, an output of the time counter 53 just before reset indicates an interval of pulses provided by the edge detector 52.

An output pulse of the edge detector 52 is provided as a latch timing signal to a latch 54 acting as storage means. Upon receiving the latch timing signal, the latch 54 stores a digital output of the time counter 53. Namely, the latch 54 holds a count value of the time counter 53 just before the time counter 53 is reset.

Outputs of the time counter 53 and latch 54 are provided to a comparator 55 and a selector 56. The comparator 55 compares the outputs of the time counter 53 and latch 54 with each other, and provides a binary signal indicating which of them is larger than the other.

A selector 56 receives the binary output of the comparator 55 as a select signal, selects larger one of the outputs of the time counter 53 and latch 54, and provides the selected one to a speed calculator 57.

The speed calculator 57 calculates an inverse number of the output value of the selector 56, and multiplies the inverse number by a coefficient that is set according to the sample period, track pitch, etc., thereby providing a relative speed of the light spot moving radially on the optical disk 1. The speed calculator 57 then provides a digital output corresponding to the relative speed of the light spot to a digital-to-analog converter 58.

The digital-to-analog converter 58 converts the digital output into a speed signal V1, which is provided to a differential amplifier 63, in which the signal V1 is subtracted from a reference speed signal V2.

The reference speed signal V2 indicates a reference value of the relative speed of the light spot in a track accessing operation. The reference speed signal V2 is based on a detection signal of an access mark portion 6 of a servo area 3 of the optical disk 1, and generated by an access mark pattern extracting circuit 59, memory 60, track counter 61, and a reference speed detector 62.

Namely, an output of the waveform shaping circuit 18 is provided to the access mark pattern extracting circuit 59, which extracts a binary pattern, i.e., an access mark pattern, according to the detection signal of the access mark portion 6 at every sample timing. The extracted access mark pattern is provided to the memory 60 and track counter 61. The track counter 61 compares the access mark pattern just extracted with an access mark pattern extracted at preceding sample timing and stored in the memory 60, finds the number of tracks crossed by the light spot during an interval between the two sample timings, accumulates the crossed tracks number, and provides the total number of tracks crossed till now by the light spot in the track accessing operation.

The reference speed detector 62 subtracts the total track number obtained by the track counter 61 from a track number set at the start of the track accessing operation as the number of tracks which must be crossed by the light spot to reach a target track, thereby finding the number of remaining tracks up to the target track. The reference speed detector 62 then generates the reference speed signal V2 corresponding to the number of remaining tracks. The reference speed detector 62 has a ROM table that is storing relations of the numbers of remaining tracks and optimum reference speeds, and finds an optimum reference speed in the ROM table for a given remaining track number to provide the analog reference speed signal V2.

The differential amplifier 63 amplifies the difference (V2-V1) between the measured speed signal V1 and the reference speed signal V2, and provides a speed error signal EV indicative of an error of the measured speed. The speed error signal EV is supplied to a servo circuit 67.

The servo circuit 67 also receives a positional error signal EP that is indicative of a positional error of the light spot relative to the target track in the radial direction of the optical disk 1. The positional error signal EP is generated by sample and hold circuits 64 and 65, and differential amplifier 66. The sample and hold circuits 64 and 65 receive sample timing signals S2 and S3, respectively, from the timing signal generator 22, to sample and hold signals corresponding to first and second wobbled pits 7 and 8 from the detection signal provided by the preamplifier 17. The differential amplifier 66 amplifies the difference of outputs of the sample and hold circuits 64 and 65, and provides the positional error signal EP.

When a distance from a start track to the target track is relatively long, the track accessing process can generally be divided into an acceleration period during which the relative speed of the light spot is gradually increased, a constant speed period during which the relative speed of the light spot is kept constant until the light spot is brought close to the target track, and a deceleration period during which the relative speed of the light spot is decelerated in the vicinity of the target track. During these periods, the relative speed of the light spot is controlled according to the speed error signal EV. When the light spot reaches the target track, the light spot is controlled according to the positional error signal EP to trace the target track.

To achieve such track accessing control of the light spot, the servo circuit 67 selects one of the speed error signal EV and positional error signal EP according to a mode switching signal MS, and provides the selected one through a phase compensating circuit, etc., to an actuator driver 68. The actuator driver 68 amplifies the output signal of the servo circuit 67 to provide an appropriate signal to an actuator 70.

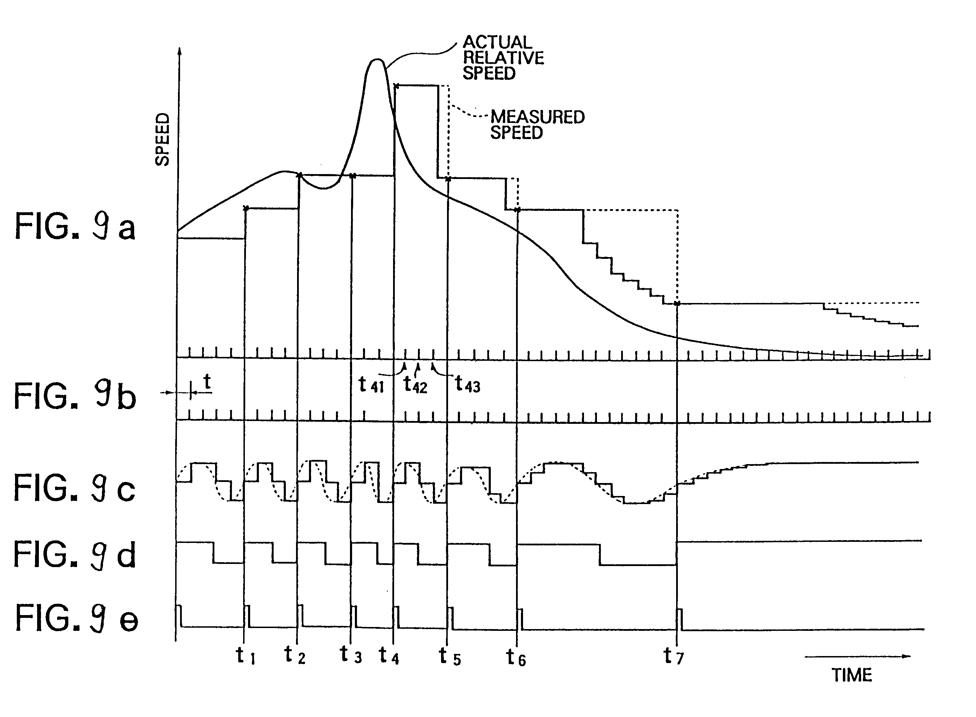

With reference to time charts of Figs. 9a to 9e, an operation of the embodiment of the present invention for measuring the relative speed of the light spot that is moving radially on the optical disk 1 will be explained in detail.

In Fig. 9a, a thin line indicates temporal changes of actual relative speed of the light spot, a dotted line the same speed but measured by the conventional optical disk unit, and a thick line the same speed but measured by the embodiment of the present invention. Figure 9b shows a sample timing signal S1, Fig. 9c a sample and hold signal of the clock pit provided by the sample and hold circuit 50 according to the sample timing signal S1, Fig. 9d a binary signal provided by the waveform shaping circuit 51, and Fig. 9e waveform of a pulse train provided by the edge detector 52.

As shown in the figures, pulses provided by the edge detector 52 are synchronous to the sample timing signal S1. Each pulse of the edge detector 52 is given to the reset input R of the time counter 53. The clock input CK of the time counter 53 receives the sample timing signal S1. Accordingly, whenever the edge detector 52 provides a pulse, the time counter 53 measures an elapsed time after the generation of the pulse until the next sample timing, as a multiple of a cycle τ of the sample timing signal S1.

During the acceleration and constant speed periods, an output of the latch 54 is larger than or equal to an output of the time counter 53. The selector 56 selects, therefore, the output of the latch 54 according to an output of the comparator 55. Namely, the selector 56 selects, at the present sample timing, a time difference between the present and preceding pulses generated by the edge detector 52, and provides the same to the speed calculator 57.

In the decelerating period, the time counter 53 measures an elapsed time from a pulse generated by the edge detector 52 at the present sample timing until the next sample timing, as a multiple of the cycle τ of the sample timing signal S1, thereby estimating the relative speed of the light spot for the preceding sample timing. This operation will be explained for a time period between t4 and t5 of Fig. 9. Each interval between t4, t41, t42, and t43 is one sample period τ.
(1) At t4, edge detector 52 generates a pulse, and the time counter 53 counts "1" at t4. Meantime, according to the pulse generated by the edge detector 52, the latch 54 latches at t4 the number "3" of the sample timing signals S1 for the time period between t3 and t4. At this moment, the comparator 55 judges that the output of the latch 54 is larger than the output of the time counter 53, so that the selector 56 selects the output "3" of the latch 54, and provides the selected one to the speed calculator 57.
(2) At the next sample timing t41, the edge detector 52 does not generate a pulse, so that the latch 54 keeps the number "3" as it is, and the time counter 53 increases its count to "2" at t41. In this case also, the comparator 55 judges that the output of the latch 54 is larger than the output of the time counter 53, so that the selector 56 continues to provide the output "3" of the latch 54 to the speed calculator 57.
(3) At the next sample timing t42, the edge detector 52 does not generate a pulse, so that the latch 54 keeps the number "3" as it is, and the time counter 53 increases its count to "3" at t42. Since the outputs of the time counter 53 and latch 54 are each "3", the selector 56 continues to provide the value "3" to the speed calculator 57.
(4) At the next sample timing t43, the edge detector 52 does not generate a pulse, so that the latch 54 keeps the number "3" as it is, and the time counter 53 increases its count to "4" at t43. Then, the comparator 55 judges that the output "4" of the time counter 53 is larger than the output "3" of the latch 54, and therefore the selector 56 selects the output "4" of the time counter 53 and provides the same to the speed calculator 57. As a result, the speed calculator 57 provides a speed signal having a value smaller than a preceding value. The value of the relative speed signal is equal to a value for a time when the next pulse is provided by the edge detector 52.

As indicated-with the thick line in Fig. 9a, the speed provided by the speed calculator 57 can predict a reduction in the actual speed in the deceleration period. Namely, during the deceleration period, the present invention can satisfactorily measure the light spot relative speed with small phase delay.

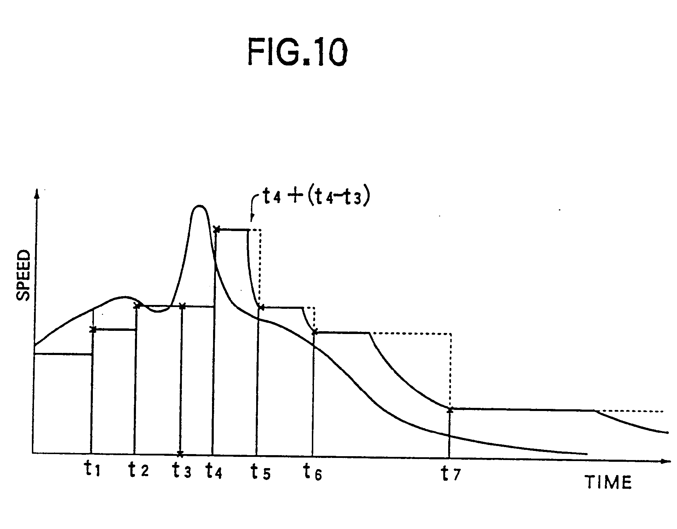

In the above explanation, the clock input CK of the time counter 53 receives, as a time counting signal, the sample timing signal S1 from the timing signal generator 22. Instead, a faster system clock may be provided to the clock input CK as a modification of the above embodiment of the invention. In this case, a value counted by the time counter 53 substantially continuously increase, so that relations of the actual speed and measured speed will be as shown in Fig. 10. Operations of this modification in the acceleration and constant speed periods are similar to those of the above embodiment. According to an output of the comparator 55, the selector 56 selects an output of the latch 54, i.e., a time period counted between a last pulse and the preceding pulse that have been generated by the edge detector 52, and provides the selected one to the speed calculator 57.

An operation of the modification for the deceleration period from t4 to t5 will be explained.

When the edge detector 52 generates a pulse at t4, the latch 54 is holding a time count (t4-t3) for a period between t4 and t3, and the time counter 53 starts to count an elapsed time from t4. Up to t4+(t4-t3), an output of the latch 54 is larger than that of the time counter 53. After that, however, an output of the counter will be larger than an output of the latch 54. Accordingly, according to an output of the comparator 55, the selector 56 selects the output of the time counter 53, and provides the selected one to the speed calculator 57. Then, a measured speed calculated by the speed calculator 57 decreases until the edge detector 52 generates a pulse, as indicated with the thick line of Fig. 10. This decreasing curve corresponds to changes in output values of the time counter 53 that gradually decrease in response to the high-speed system clocks. In this way, the modification satisfactorily predicts the reduction in the light spot relative speed during the deceleration period, and demonstrates only a little phase delay.

The above explanations relate to the sample servo type optical disk unit. For a continuous servo type optical disk unit, track passing pulses obtainable from an optical disk may be used to predict a reduction in the relative speed of a light spot during the deceleration period with a little phase delay.

According to the above embodiments, the speed of a light spot relative to an optical disk in the radial direction thereof can be measured satisfactorily even for the deceleration period. Based on such speed measurement, the relative speed of the light spot can be controlled stably with a little phase delay in a track accessing operation.

## Claims

1. An optical disk unit for directing a light spot onto the surface of an optical disk provided with tracks, obtaining detection signals from a reflection of the light spot, moving the light spot according to the detection signals to a target one of the tracks, and recording and reading information to and from the target track, comprising:
pulse train generating means (52) for generating a train of pulses according to said detection signals whose intervals change in response to changes in a speed of the light spot that is moved relative to the optical disk in a radial direction of the optical disk;
time measuring means (53) that starts to measure an elapsed time whenever said pulse train generating means (52) generates a pulse, and provides an output indicative of the elapsed time;
storage means (54) for storing the output of said time measuring means (53) until said pulse train generating means (52) generates the next pulse; and
arithmetic means (55, 56, 57; 38) for comparing the output of said time measuring means (53) with an output of said storage means (54), selecting larger one of the outputs of said time measuring means (53) and storage means (54), and calculating the speed of the light spot relative to the optical disk using said larger output.

2. The optical disk unit as claimed in claim 1, further comprising:
sample hold means (50) for sampling and holding the detection signal in response to a sample timing signal, and providing a sample and hold signal;
said pulse train generating means (52) receiving sample and hold signals from the sample hold means (50), and generating, in synchronism with sample timing signals, a train of pulses whose intervals change in response to changes in the speed of the light spot relative to the optical disk.

3. The optical disk unit as claimed in claim 2, wherein
said time measuring means (53) starts to measure an elapsed time as a multiple of an interval of the sample timing signals whenever said pulse train generating means (52) generates a pulse, and provides an output indicative of the elapsed time.

4. The optical disk unit as claimed in claim 2, wherein
said time measuring means (53) is constructed to measure a time period between a sample timing when said pulse train generating means (52) generates a pulse and the next sample timing of the sample timing as a multiple of an interval of the sample timing signals, and provides an output indicative of the time period.

5. The optical disk unit as claimed in claim 1, wherein
the optical disk is provided with concentrical or spiral tracks on which a plurality of sample servo pits form servo areas involving access marks specific for every predetermined number of the tracks,
the access marks are detected to obtain detection signals, and
the pulse train generating means (52) detects a change in the access marks.

## Patentansprüche

1. Optische Platteneinheit zum Richten eines Lichtflecks auf die Oberfläche einer optischen Platte, die mit Spuren versehen ist, Erhalten von Erfassungssignalen von einer Reflexion des Lichtflecks, Bewegen des Lichtflecks gemäß der Erfassungssignal auf eine Zielspur und Aufnehmen und Lesen von Information auf und von der Zielspur, umfassend:
eine Impulsketten-Erzeugungseinheit (52) zum Erzeugen einer Impulskette gemäß den Erfassungssignalen, deren Intervalle sich ändern ansprechend auf Änderungen in einer Geschwindigkeit des Lichtfleckes, relativ zur optischen Platte in einer radialen Richtung der optischen Platte bewegt wird;
eine Zeitmeßeinrichtung (53), welche eine verstrichene Zeit immer dann zu messen beginnt, wenn die Impulsketten-Erzeugungseinrichtung (52) einen Impuls erzeugt, und eine Ausgabe schafft zum Anzeigen der verstrichenen Zeit;
eine Speichereinrichtung (54) zum Speichern der Ausgabe der Zeitmeßeinrichtung (53), bis die Impulsketten-Erzeugungseinrichtung (52) den nächsten Impuls erzeugt; und
eine Arithmetikeinrichtung (55, 56, 57; 38) zum Vergleichen der Ausgabe der Zeitineßeinrichtung (53) mit einer Ausgabe der Speichereinrichtung (54), Auswählen einer größeren der Ausgaben der Zeitmeßeinrichtung (53) und Speichereinrichtung (54) und Berechnen der Geschwindigkeit des Lichts relativ zur optischen Platte unter Benutzung der größeren Ausgabe.

2. Optische Platteneinheit nach Anspruch 1, gekennzeichnet durch:
eine Abtast-/Halteeinrichtung (50) zum Abtasten und Halten des erfaßten Signals ansprechend auf ein Abtastzeitpunktsignal uns Schaffen eines Abtast- und Haltesignals;
wobei die Impulsketten-Erzeugungseinrichtung (52) Abtast- und Halte-Signale von der Abtast-/Halteeinrichtung 50 empfängt und synchron mit Abtastzeitsignalen eine Impulskette erzeugt, deren Intervalle sich ändern ansprechend auf Änderungen in der Geschwindigkeit des Lichtflecks relativ zur optischen Platte.

3. Optische Platteneinheiten nach Anspruch 2, dadurch gekennzeichnet, daß
die Zeitmeßeinrichtung (53) eine verstrichene Zeit zum Messen beginnt als ein Vielfaches eines Intervalls der Abtastzeitsignale immer dann, wenn die Impulsketten-Erzeugungseinrichtung (52) einen Impuls erzeugt, und eine Ausgabe zum Anzeigen der verstrichenen Zeit schafft.

4. Optische Platteneinheit nach Anspruch 2, dadurch gekennzeichnet, daß
die Zeitmeßeinrichtung (53) konstruiert ist zum Messen einer Zeitperiode zwischen einem Abtastzeitpunkt, wenn die Impulsketten-Erzeugungseinrichtung (52) einen Impuls schafft und dem nächsten Abtastzeitpunkt des Abtastzeitpunkt als ein Vielfaches eines Intervalls der Abtastzeitsignale und eine Ausgabe zum Anzeigen der Zeitperiode schafft.

5. Optische Platteneinheit nach Anspruch 1, dadurch gekennzeichnet, daß
die optische Platte versehen ist mit konzentrischen oder sprialförmgien Spuren auf die eine Vielzahl von Abtast-Servo-Pits Servo-Bereiche einschließlich Zugriffsmarkierungen spezifisch für jede vorbestimmte Anzahl der Spuren schafft, versehen ist,
die Zugriffsmarkierungen erfaß werden zum Erhalten von Erfassungssignalen, und
die Impulsketten-Erzeugungseinrichtungen (52) eine Änderung in den Zugriffsmarkierungen erfaßt.

## Revendications

1. Unité de disque optique pour diriger un point lumineux sur la surface d'un disque optique pourvu de pistes, obtenir des signaux de détection à partir d'une réflexion du point lumineux, déplacer le point lumineux conformément aux signaux de détection vers une piste cible parmi les pistes et enregistrer et lire des informations sur la piste cible, comprenant :
un moyen de génération de train d'impulsions (52) servant à générer un train d'impulsions conformément auxdits signaux de détection dont les intervalles sont modifiés en réponse aux modifications d'une vitesse du point lumineux qui est déplacé par rapport au disque optique suivant une direction radiale de celui-ci,
un moyen de mesure de temps (53) qui commence à mesurer un temps écoulé chaque fois que ledit moyen de génération de train d'impulsions (52) génère une impulsion et produit une sortie indicative du temps écoulé,
un moyen de mémorisation (54) servant à mémoriser la sortie dudit moyen de mesure de temps (53) jusqu'à ce que ledit moyen de génération de train d'impulsions (52) génère l'impulsion suivante, et
des moyens arithmétiques (55, 56, 57 ; 38) servant à comparer la sortie dudit moyen de mesure de temps (53) à une sortie dudit moyen de mémorisation (54), à sélectionner la plus grande des sorties dudit moyen de mesure de temps (53) et du moyen de mémorisation (54) et à calculer la vitesse du point lumineux par rapport au disque optique en utilisant ladite plus grande sortie.

2. Unité de disque optique selon la revendication 1, comprenant en outre :
un moyen échantillonneur/bloqueur (50) servant à échantillonner et à bloquer le signal de détection en réponse à un signal de synchronisation d'échantillonnage et à produire un signal d'échantillonnage et de blocage,
ledit moyen de génération de train d'impulsions (52) recevant des signaux d'échantillonnage et de blocage du moyen échantillonneur/bloqueur (50) et à générer en synchronisme avec des signaux de synchronisation d'échantillonnage, un train d'impulsions dont les intervalles sont modifiés en réponse aux modifications de la vitesse du point lumineux par rapport au disque optique.

3. Unité de disque optique selon la revendication 2, dans laquelle :
ledit moyen de mesure de temps (53) commence à mesurer un temps écoulé comme un multiple d'un intervalle des signaux de synchronisation d'échantillonnage à chaque fois que ledit moyen de génération de train d'impulsions (52) génère une impulsion et produit une sortie indicative du temps écoulé.

4. Unité de disque optique selon la revendication 2, dans laquelle :
ledit moyen de mesure de temps (53) est conçu pour mesurer une période de temps entre une synchronisation d'échantillonnage lorsque ledit moyen de génération de train d'impulsions (52) génère une impulsion et la synchronisation d'échantillonnage suivante de la synchronisation d'échantillonnage comme un multiple d'un intervalle des signaux de synchronisation d'échantillonnage et produit une sortie indicative de la période de temps.

5. Unité de disque optique selon la revendication 1, dans laquelle :
le disque optique est pourvu de pistes concentriques ou en spirale sur lesquelles une multitude de microcuvettes d'asservissement d'échantillonnage forment des zones d'asservissement comportant des repères d'accès spécifiques à chaque nombre prédéterminé de pistes,
les repères d'accès sont détectés pour obtenir des signaux de détection, et
le moyen de génération de train d'impulsions (52) détecte une modification dans les repères d'accès.
